# EUROPÄISCHE PATENTANMELDUNG

(11) **EP 1 806 476 A1**
(43) Veröffentlichungstag der Anmeldung: **11.07.2007**
(21) Anmeldenummer: 06000182.3
(22) Anmeldetag: 05.01.2006
(51) Int. Cl.: F01D 3/04, F01D 5/08

(54) **Turbine für ein thermisches Kraftwerk**

(71) Anmelder: SIEMENS AKTIENGESELLSCHAFT, 80333 München (DE)
(72) Erfinder: Kachel, Carmen-Elisabeth, Dr., 45470 Mülheim an der Ruhr (DE); Kostenko, Yevgen, Dr., 40878 Ratingen (DE); Wechsung, Michael, 45470 Mülheim an der Ruhr (DE); Wieghardt, Kai, Dr., 44869 Bochum (DE)

(57) **Zusammenfassung**

Eine Turbine (10) für ein thermisches Kraftwerk mit einer Turbinenwelle (12) sowie einem die Turbinenwelle (12) umgebenden Innengehäuse (16), wobei die Turbinenwelle (12) einen Schubausgleichskolben (30) zum zumindest teilweisen Ausgleichen eines auf die Turbinenwelle (12) ausgeübten Schaufelschubs aufweist, ist erfindungsgemäß gekennzeichnet durch einen zumindest abschnittsweise innerhalb des Innengehäuses (16) in Längsrichtung der Turbinenwelle (12) verlaufenden Führungskanal (34) zum Führen eines Kühlmediums (42), wobei die Turbinenwelle (12) im Bereich des Schubausgleichskolbens (30) eine mittels Drehung der Turbinenwelle (12) antreibbare Ventilatorstruktur (32) zum Antreiben des Kühlmediums (42) bei sich drehender Turbinenwelle (12) aufweist.

## Beschreibung

Die Erfindung betrifft eine Turbine für ein thermisches Kraftwerk mit einer Turbinenwelle sowie einem die Turbinenwelle umgebenden Innengehäuse, wobei die Turbinenwelle einen Schubausgleichskolben zum zumindest teilweisen Ausgleichen eines auf die Turbinenwelle ausgeübten Schaufelschubs aufweist. Darüber hinaus betrifft die Erfindung eine Turbinenwelle für eine Turbine eines thermischen Kraftwerks mit einem Schubausgleichskolben zum zumindest teilweise Ausgleichen eines auf die Turbinenwelle ausgeübten Schaufelschubs. Die vorgenannte Turbine kann als Dampfturbine oder als Gasturbine ausgeführt sein.

Bei Turbinen der oben genannten Art ist der Schubausgleichskolben in Gestalt eines zumindest teilweise um die Turbinenwelle umlaufenden Steges ausgebildet, welcher von einem Teil eines in die Turbine einströmenden Antriebsfluids in zur Hauptströmungsrichtung des Antriebsfluids entgegengesetzter Richtung angeströmt wird. Der überwiegende Anteil des Antriebsfluids strömt in einem die Turbinenwelle umgebenden Strömungskanal in Strömungshauptrichtung und treibt dabei an der Turbinenwelle befestigte Turbinenschaufeln an. Durch den auf den Schubausgleichskolben ausgeübten Druck in Gegenrichtung zur Strömungshauptrichtung wird der auf die Turbinenwelle ausgeübte Schaufelschub zumindest teilweise ausgeglichen.

Bei vorbekannten Turbinen der eingangs genannten Art wird zur Kühlung kritischer Bereiche der Turbine Kühldampf von außen her in die Turbine eingeblasen. Diese Art der Kühlung ist aber aus der thermodynamischen und konstruktiven Sicht in der Regel nicht optimal realisierbar. Weiterhin ist diese Art der Kühlung aufwendig, da eigene Zufuhrleitungen zum Einführen des Kühldampfes durch das Innengehäuse und durch ein dieses umgebendes Außengehäuse geführt werden müssen. Auch außerhalb der Turbine müssen zusätzliche Vorrichtungen zum Bereitstellen des Kühldampfes vorgesehen werden. Diese Art der Kühlung ist damit konstruktiv aufwendig. Weiterhin wird die Turbinenwelle damit nur unzureichend gekühlt, so dass kostenintensive warmfeste Werkstoffe zur Herstellung der Turbinenwelle verwendet werden müssen.

Eine der Erfindung zugrunde liegende Aufgabe besteht darin, eine Turbine der eingangs genannten Art bereitzustellen, bei der eine Kühlung der Turbinenwelle effizienter und unaufwendiger bewerkstelligt werden kann.

Diese Aufgabe ist erfindungsgemäß mit einer gattungsgemäßen Turbine gelöst, welche einen Führungskanal zum Führen eines Kühlmediums aufweist, der zumindest abschnittsweise in einem einen axial an den Schubausgleichskolben anschließenden Abschnitt der Turbinenwelle umgebenden Bereich innerhalb des Innengehäuses in Längsrichtung der Turbinenwelle verläuft, wobei die Turbinenwelle im Bereich des Schubausgleichskolbens eine mittels Drehung der Turbinenwelle antreibbare Ventilatorstruktur zum Antreiben des Kühlmediums bei sich drehender Turbinenwelle aufweist. Insbesondere verläuft der Führungskanal zumindest abschnittsweise in einem einen Schaufelabschnitt der Turbinenwelle zum Befestigen mindestens einer Turbinenschaufel umgebenden Bereich innerhalb des Innengehäuses in Längsrichtung der Turbinenwelle.

Erfindungsgemäß wird also durch Drehung der Turbinenwelle die Ventilatorstruktur in Gang gesetzt, insbesondere bedingt durch eine Druckdifferenz zwischen einem Abströmabschnitt und einem Gehäusezwischenraum im Hinterkolbenbereich, wodurch ohne zusätzliche Antriebsvorrichtungen das Kühlmedium in dem Führungskanal in Bewegung gesetzt wird. Damit muss im Vergleich zum Stand der Technik keine externe Vorrichtung zum Antreiben des Kühlmediums vorgesehen werden. Weiterhin wird das Kühlmedium in der erfindungsgemäßen Turbine durch die hohe Antriebsenergie der Turbinenwelle mit großem Schub angetrieben. Die Turbinenwelle, insbesondere im Hinterkolbenbereich, ein das Innengehäuse umgebendes Außengehäuse und/oder Fugenschrauben des Innengehäuses können mit entsprechend großer Kühlleistung gekühlt werden. Die erfindungsgemäße Führung des Kühlmediums zumindest abschnittsweise innerhalb des Innengehäuses in Längsrichtung der Turbinenwelle dient einer effizienteren Kühlung der Turbinenwelle, des Außengehäuses und/oder der Fugenschrauben. Das Innengehäuse ist in der Regel von einem Außengehäuse umgeben und weist vorzugsweise daran befestigte Leitschaufeln auf. Durch die Führung des Kühlmediums innerhalb des Innengehäuses in Längsrichtung kann aufgrund der räumlichen Nähe eine besonders effiziente Kühlung der Turbinenwelle sowie von Leitschaufeln bewerkstelligt werden.

Neben der unaufwendigeren und damit kostengünstigeren Konstruktion der Kühlung ist diese damit erheblich wirksamer und effizienter. Damit kann bei Kühlung der Welle sowie des Gehäuses mit Fugenschrauben im stationären Betrieb die Lebensdauer des Turbinenwerkstoffes erhöht werden. Bei Vorwärmung der Welle im instationären Betrieb mittels des Kühlmediums ergibt sich eine Verkürzung der An-/ und Abfahrzeiten. Durch die erfindungsgemäße Kühlung wird darüber hinaus der Einsatz kostengünstigerer Werkstoffe für die Turbinenwelle und andere im Einströmbereich der Teilturbine angeordnete Komponenten ermöglicht. So kann bei der erfindungsgemäßen Turbine von einer Verwendung von im Stand der Technik eingesetzten kostenintensiven hochlegierten Werkstoffen in vielen Fällen abgesehen werden. Auch kann durch die mittels der Erfindung erzielte effizientere Kühlung der Wartungsaufwand der Turbine verringert werden.

In vorteilhafter Ausführungsform ist die Turbinenwelle als Hochdruckdampfturbinenwelle ausgeführt. Eine Hochdruckdampfturbinenwelle ist zur Verwendung in Hochdruckdampfturbinen bestimmt, die in der Regel auf eine Dampftemperatur von 520°C bis 620°C (zukünftig 700°C) und einen Dampfdruck von 120 bar bis 300 bar ausgelegt sind. Die als Hochdruckdampfturbinenwelle ausgelegte Turbinenwelle kann aber auch in einer so genannten K-Turbine eingesetzt sein, die eine Kombination aus Hochdruck- und Mitteldruckturbine in einem einzigen Gehäuse ist. Bei der erfindungsgemäßen Turbine handelt es sich bei diesem Ausführungsbeispiel daher um eine Hochdruckdampfturbine, eine K-Turbine oder ähnliches. Die erfindungsgemäße Kühlung ist bei einer Hochdruckdampfturbinenwelle besonders vorteilhaft, da diese besonders hitze- und druckbeständig ausgelegt ist und damit besonders kostenintensive Werkstoffe aufweist. Durch die erfindungsgemäße Kühlung kann die Temperaturbeanspruchung einer derartigen Hochdruckdampfturbinenwelle verringert werden, wobei bereits eine Temperaturverringerung von z. B. 20°C eine erhebliche Kosteneinsparung hinsichtlich der verwendeten Werkstoffe und/oder des benötigten Wartungsaufwandes ermöglicht.

Zweckmäßigerweise ist die Ventilatorstruktur am Schubausgleichskolben angeordnet, und insbesondere integral im Schubausgleichskolben ausgebildet. Die Herstellung und Wartung der Ventilatorstruktur ist damit besonders einfach.

Vorteilhafterweise weist die Ventilatorstruktur mindestens eine in dem Schubausgleichskolben ausgebildete Ausnehmung auf, die insbesondere bei sich drehender Turbinenwelle das Kühlmedium in hinsichtlich der Turbinenwelle radialer Richtung antreibt. Vorteilhaftweise wird die Ventilatorstruktur mittels geeigneter Bohrungen in dem Schubausgleichskolben gebildet. Damit ist ein besonders wirksamer Antrieb des Kühlmediums und somit eine besonders effiziente Kühlung der Turbinenwelle möglich.

Weiterhin ist es vorteilhaft, wenn die Turbinenwelle einen Schaufelabschnitt zum Befestigen mindestens einer Turbinenschaufel aufweist und der Führungskanal zumindest abschnittsweise im Bereich des Schaufelabschnitts, insbesondere über die gesamte Längserstreckung des Schaufelabschnittes entlang der Turbinenwelle, innerhalb des Innengehäuses verläuft. In diesem Fall besteht eine hohe thermische Kopplung zwischen den verschiedenen Bereichen der Turbinenwelle und dem Kühlmedium, wodurch die Turbinenwelle in nahe an einem Einströmbereich für das Turbinenantriebsfluid gelegenen Abschnitten entsprechend wirksam gekühlt werden kann. Im Bereich von weiter von dem Einströmbereich in Strömungsrichtung des Turbinenantriebsfluids weg gelegenen und damit kühleren Abschnitten der Turbine hingegen kann das Kühlmedium wieder Wärmeenergie an die Turbine abgeben, um daraufhin in abgekühltem Zustand wieder den wärmeren Turbinenbereichen zugeführt zu werden. Damit ergibt sich ein besonders kompakter Kühlkreislauf innerhalb der Turbine. Vorteilhafterweise ist der Führungskanal durch Axialbohrungen im Innengehäuse gebildet, die zweckmäßigerweise in Umfangsrichtung ausreichend versetzt sind, damit die Zirkulation optimal verläuft und heißer Kolbenleckdampf nicht wieder angesaugt wird.

Um den Kühlkreislauf möglichst effizient betreiben zu können, ist es darüber hinaus zweckmäßig, wenn die Turbinenwelle einen Einströmabschnitt, bei dem ein Turbinenantriebsfluid in einen die Turbinenwelle umgebenden Strömungskanal einströmt, sowie einen Abströmabschnitt, bei dem das Turbinenantriebsfluid in abgekühltem Zustand den Strömungskanal wieder verlässt, aufweist, wobei der Führungskanal zumindest abschnittsweise im Bereich des Abströmabschnitts verläuft. Im Abströmabschnitt ist das die Turbine antreibende Antriebsfluid bereits vergleichsweise abgekühlt und dekomprimiert. Durch ein Heranführen des Führungskanals an den Abströmabschnitt der Turbinenwelle kann das Kühlmedium besonders wirkungsvoll überschüssige Wärmeenergie an den Abströmabschnitt der Turbinenwelle abgeben. Zumindest aber sollte der Führungskanal in einem Bereich der Turbine innerhalb des Innengehäuses verlaufen, an dem das Antriebsfluid bereits erheblich abgekühlt ist. Durch die so bewerkstelligte Abkühlung des Kühlmediums in enger räumlicher Nähe der Turbinenwelle kann der Kühlkreislauf kompakt gehalten werden. Es müssen damit keine zusätzlichen Abkühlvorrichtungen in der Turbine, insbesondere in Außenbereichen der Turbine vorgesehen werden. Weiterhin weist die Turbinenwelle im Abströmabschnitt eine hohe Wärmeaufnahmekapazität auf.

Vorteilhafterweise ist der Führungskanal schleifenförmig zum Führen des Kühlmediums in einem die Ventilatorstruktur einbindenden Kreislauf ausgebildet. Der Führungskanal weist damit einen Ableitungsabschnitt zum Führen des von der Ventilatorstruktur angetriebenen Kühlmediums und einen Rückleitungsabschnitt auf, über den das Kühlmedium durch Druckdifferenz bedingt wieder zur Ventilatorstruktur zurückströmt. Damit muss zur Kühlung der Turbinenwelle nicht kontinuierlich neues Kühlmedium zugeführt werden. Vielmehr läuft das bereits vorliegende Kühlmedium kreisförmig in dem schleifenförmigen Führungskanal um.

In vorteilhafter Ausführungsform ist der Führungskanal zum Kühlen von im Bereich eines Einströmabschnitts der Turbinenwelle angeordneten Turbinenelementen, insbesondere des Einströmabschnitts, des Schubausgleichskolbens und/oder der Turbinenwelle im Bereich zwischen dem Einströmabschnitt und dem Schubausgleichskolben, angeordnet. Die aufgeführten Bauteile der Turbinenwelle werden durch das einströmende Turbinenantriebsfluid besonders aufgeheizt. Es ist damit besonders vorteilhaft, wenn der Führungskanal bei diesen Bauteilen verläuft, insbesondere innerhalb des Innengehäuses im Bereich dieser Bauteile angeordnet ist. Insbesondere ist es zweckmäßig, wenn der Führungskanal im Bereich zwischen dem Einströmabschnitt und dem Schubausgleichskolben in Längsrichtung der Turbinenwelle des Innengehäuses verläuft.

In einer weiteren vorteilhaften Ausführungsform ist der Führungskanal im Bereich des Schubausgleichskolbens an einem das Innengehäuse umgebenden Außengehäuse entlanggeführt, insbesondere verläuft der Führungskanal in einem bezüglich der Turbinenwelle in radialer Richtung zwischen Innengehäuse und Außengehäuse erstreckenden Zwischenraum. Bei einer Turbine mit einem derartigen im Bereich des Schubausgleichskolbens an dem Innengehäuse anliegenden Außengehäuse, erstreckt sich das Außengehäuse in der Regel in radialer Richtung der Turbinenwelle an dem Schubausgleichskolben entlang. Dabei wird das Außengehäuse in diesem Bereich über den Schubausgleichskolben und das angrenzende Innengehäuse besonders aufgeheizt. Durch die Anordnung des Führungskanals in einem Zwischenraum zwischen dem Innengehäuse und dem Außengehäuse in diesem Bereich kann eine übermäßige Überhitzung des Außengehäuses vermieden werden.

Weiterhin ist es zweckmäßig, wenn das Innengehäuse zwei durch mindestens ein Verbindungselement miteinander verbundene Gehäuseteile aufweist, wobei der Führungskanal an dem mindestens einen Verbindungselement zum Kühlen des Verbindungselements entlang geführt ist. Die beiden Gehäuseteile des Innengehäuses sind in der Regel als Halbschalen ausgeführt, die über eine Verbindungsfuge mittels mindestens einem Verbindungselement, wie etwa mittels Schrauben verbunden sind. Da dieses Verbindungselement besonders hohen Kräften ausgesetzt ist, ist eine wirksame Kühlung desselben besonders vorteilhaft. Eine Ausfallwahrscheinlichkeit des Verbindungselements wird damit verringert. Auch kann das Verbindungselement aus weniger kostenintensiven Materialien gefertigt werden.

Darüber hinaus ist die vorstehend genannte Aufgabe mit einer gattungsgemäßen Turbinenwelle gelöst, welche als Hochdruckdampfturbinenwelle ausgeführt ist und eine im Bereich des Schubausgleichskolbens angeordnete, mittels Drehung der Turbinenwelle antreibbare Ventilatorstruktur zum Antreiben eines die Turbinenwelle zumindest abschnittsweise kühlenden Kühlmediums aufweist. Wie bereits hinsichtlich der erfindungsgemäßen Turbine aufgeführt, wird durch den Antrieb der Ventilatorstruktur mittels Drehung der Turbinenwelle eine von einem externen Antriebsmechanismus unabhängige Kühleinrichtung geschaffen. Damit lässt sich die Turbinenwelle besonders unaufwendig kühlen. Durch die große Antriebskraft der Turbinenwelle kann weiterhin das Kühlmedium mit großer Schubkraft angetrieben werden, wodurch die Kühlung besonders effizient gestaltet wird.

In vorteilhafter Ausführungsform der Turbinenwelle ist die Ventilatorstruktur am Schubausgleichskolben angeordnet, insbesondere integral im Schubausgleichskolben ausgebildet. Vorteilhafterweise weist die Ventilatorstruktur mindestens eine in dem Schubausgleichskolben ausgebildete Ausnehmung auf, die insbesondere bei sich drehender Turbinenwelle das Kühlmedium in hinsichtlich der Turbinenwelle radialer Richtung antreibt. Insbesondere weist die Turbinenwelle als Ventilatorstruktur dienende geeignete Bohrungen auf.

Nachfolgend wird ein Ausführungsbeispiel einer erfindungsgemäßen Turbine anhand der beigefügten schematischen Zeichnung näher erläutert.

Die einzige Figur der Zeichnung zeigt:
eine Längsschnittansicht einer erfindungsgemäßen Turbine für ein thermisches Kraftwerk.

Die Figur zeigt eine als Hochdruckdampfturbinenwelle ausgeführte Dampfturbine 10 im Längsschnitt. Die Dampfturbine 10 weist eine zum Betrieb in einer Hochdruckdampfturbine ausgelegte Turbinenwelle 12 auf, die um eine Drehachse 14 drehbar ist. Die Turbinenwelle 12 ist von einem feststehenden Innengehäuse 16 umgeben, um welches wiederum ein Außengehäuse 18 angeordnet ist. Heißer komprimierter Dampf wird über eine Einströmkammer 20 des Innengehäuses 16 in die Dampfturbine 10 eingebracht. Dabei strömt ein Großteil des Dampfes in einen zwischen der Turbinenwelle 12 und dem Innengehäuse 16 ausgebildeten Strömungskanal 22 ein. Der Strömungskanal 22 erstreckt sich mantelartig um einen Schaufelabschnitt 26 der Turbinenwelle 12 herum.

Am Schaufelabschnitt 26 sind Laufschaufeln in mehreren Schaufelstufen angeordnet. Dem Schaufelabschnitt 26 der Turbinenwelle 12 gegenüberliegend sind am Innengehäuse 16 Laufschaufeln befestigt. Der durch den Strömungskanal 22 strömende Dampf treibt die Turbinenwelle 12 in Drehrichtung um die Drehachse 14 an. Dabei strömt der Dampf von einem der Einströmkammer 20 gegenüberliegenden Einströmabschnitt 24 der Turbinenwelle 12 bis zu einem am entgegengesetzten Ende des Schaufelabschnitts 26 angeordneten Abströmabschnitt 28 entlang. Dabei dekomprimiert der Dampf kontinuierlich unter gleichzeitiger Temperaturverringerung. Beim Abströmabschnitt 28 verlässt der Dampf dann den Strömungskanal 22.

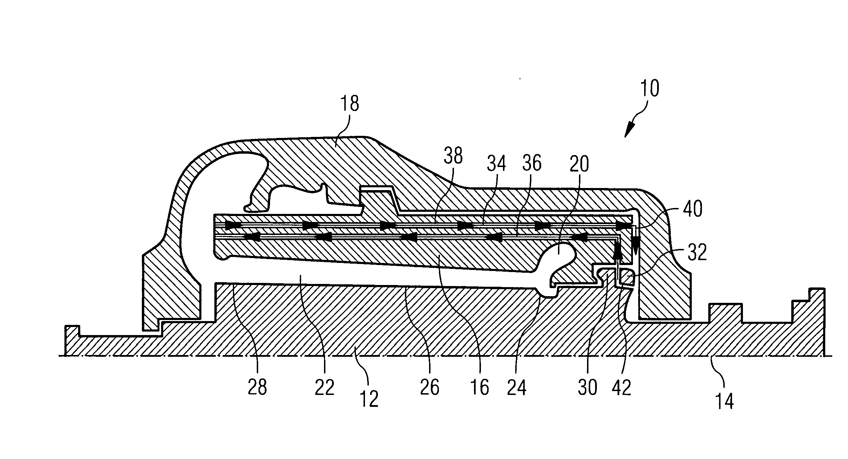

Ein kleinerer Teil des durch die Einströmkammer 20 einströmenden komprimierten Dampfes strömt in eine der Strömungsrichtung des die Turbinenschaufeln antreibenden Dampfes entgegengesetzte Richtung nach rechts gemäß Fig. 1. Dieser Teil des Dampfes strömt auf einen an der Turbinenwelle 12 in Gestalt eines umlaufenden Steges ausgebildeten Schubausgleichskolben 30 hin. Die dadurch auf den Schubausgleichskolben 30 in Axialrichtung der Turbinenwelle 12 ausgeübte Kraft dient zur Kompensation der in der entgegengesetzten Richtung auf die Laufschaufeln der Turbinenwelle 12 ausgeübten Kraft.

Im Schubausgleichskolben 30 ist eine Ventilatorstruktur 32 ausgebildet. Diese weist geeignet angeordnete Bohrungen auf, die bei sich drehender Turbinenwelle 12 ein Kühlmedium 42 in hinsichtlich der Drehachse 14 der Turbinenwelle 12 radialer Richtung antreibt. Das Kühlmedium 42 ist dabei vorteilhafterweise Wasserdampf, der den schleifenförmigen Führungskanal 34 durchströmt. Der Führungskanal 34 weist einen Ableitungsabschnitt 36, in dem das Kühlmedium 42 von der Ventilatorstruktur 32 wegströmt und einen Rückleitungsabschnitt 38, in dem Kühlmedium 42 wieder zur Ventilatorstruktur 32 zurückströmt, auf. Der Ableitungsabschnitt 36 des Führungskanals weist zunächst einen sich radial zur Drehachse 14 der Turbinenwelle 12 erstreckenden Abschnitt im Bereich des Schubausgleichskolbens 30 auf. Daran schließt sich ein parallel zur Drehachse 14 der Turbinenwelle 12 verlaufender Abschnitt in Form einer Bohrung im Innengehäuse 16 an. Dieser Abschnitt des Führungskanals 34 führt am Einströmabschnitt 24 der Turbinenwelle 12 entlang und erstreckt sich weiterhin entlang des Schaufelabschnitts der Turbinenwelle 12 bis in den Bereich des Ableitungsabschnitts 28 der Turbinenwelle 12 hinein. Im Bereich des Abströmabschnitts 28 und daran angrenzenden Bereichen des Schaufelabschnitts 26 gibt das Kühlmedium 42 Wärmeenergie an die an das Innengehäuse 16 angrenzende Turbinenwelle 12 ab. In diesem Bereich weist die Turbinenwelle 12 aufgrund des dort bereits abgekühlten Antriebsdampfes eine relativ geringe Temperatur auf.

Das Kühlmedium 42 strömt daraufhin in dem sich ebenfalls parallel zur Drehachse 14 der Turbinenwelle 12 erstreckenden Rückleitungsabschnitt 38 des Führungskanals 34 in den heißeren Bereich der Turbinenwelle 12 zurück. Dabei kühlt das Kühlmedium 42 insbesondere im Einströmabschnitt 24, dem Bereich des Schubausgleichskolbens 30 sowie dem zwischen Einströmabschnitt 24 und Schubausgleichskolben 30 liegenden Wellenabschnitt durch entsprechende Wärmeaufnahme. Im Hinterkolbenbereich weist der Rückleitungsabschnitt 38 einen radial zur Turbinenwelle 12 verlaufenden Abschnitt auf, der in einem Gehäusezwischenraum 40 zwischen dem Innengehäuse 16 und einem Bereich des Außengehäuses 18, welches an dem Schubausgleichskolben 30 anliegt, verläuft. Über diesen Gehäusezwischenraum 40 wird das aufgeheizte Kühlmedium 42 wieder der Ventilatorstruktur 32 zugeführt, und daraufhin von dieser wieder in den Ableitungsabschnitt 36 des Führungskanals 34 befördert.

## Patentansprüche

1. Turbine (10) für ein thermisches Kraftwerk mit einer Turbinenwelle (12) sowie einem die Turbinenwelle (12) umgebenden Innengehäuse (16),
wobei die Turbinenwelle (12) einen Schubausgleichskolben (30) zum zumindest teilweisen Ausgleichen eines auf die Turbinenwelle (12) ausgeübten Schaufelschubs aufweist, **gekennzeichnet durch**
einen Führungskanal (34) zum Führen eines Kühlmediums (42),
der zumindest abschnittsweise in einem einen axial an den Schubausgleichskolben (30) anschließenden Abschnitt der Turbinenwelle (12) umgebenden Bereich innerhalb des Innengehäuses (16) in Längsrichtung der Turbinenwelle (12) verläuft,
wobei die Turbinenwelle (12) im Bereich des Schubausgleichskolbens (30) eine mittels Drehung der Turbinenwelle (12) antreibbare Ventilatorstruktur (32) zum Antreiben des Kühlmediums (42) bei sich drehender Turbinenwelle (12) aufweist.

2. Turbine nach Anspruch 1,
**dadurch gekennzeichnet, dass**
die Turbinenwelle (12) als Hochdruckdampfturbinenwelle ausgeführt ist.

3. Turbine nach Anspruch 1 oder 2,
**dadurch gekennzeichnet, dass**
die Ventilatorstruktur (32) am Schubausgleichskolben (30) angeordnet ist,
insbesondere integral im Schubausgleichskolben (30) ausgebildet ist.

4. Turbine nach einem der vorausgehenden Ansprüche,
**dadurch gekennzeichnet, dass**
die Ventilatorstruktur (32) mindestens eine in dem Schubausgleichskolben (30) ausgebildete Ausnehmung aufweist, die insbesondere bei sich drehender Turbinenwelle (12) das Kühlmedium (42) in hinsichtlich der Turbinenwelle (12) radialer Richtung antreibt.

5. Turbine nach einem der vorausgehenden Ansprüche,
**dadurch gekennzeichnet, dass**
die Turbinenwelle (12) einen Schaufelabschnitt (26) zum Befestigen mindestens einer Turbinenschaufel aufweist und der Führungskanal (34) zumindest abschnittsweise im Bereich des Schaufelabschnitts (26),
insbesondere über die gesamte Längserstreckung des Schaufelabschnittes (26) entlang der Turbinenwelle (12) innerhalb des Innengehäuses (16) verläuft.

6. Turbine nach einem der vorausgehenden Ansprüche,
**dadurch gekennzeichnet, dass**
die Turbinenwelle (12) einen Einströmabschnitt (24), bei dem ein Turbinenantriebsfluid in einen die Turbinenwelle (12) umgebenden Strömungskanal (22) einströmt,
sowie einen Abströmabschnitt (28), bei dem das Turbinenantriebsfluid in abgekühltem Zustand den Strömungskanal (22) wieder verlässt, aufweist,
wobei der Führungskanal (34) zumindest abschnittsweise im Bereich des Abströmabschnitts (28) verläuft.

7. Turbine nach einem der vorausgehenden Ansprüche,
**dadurch gekennzeichnet, dass**
der Führungskanal (34) schleifenförmig zum Führen des Kühlmediums (42) in einem die Ventilatorstruktur (32) einbindenden Kreislauf ausgebildet ist.

8. Turbine nach einem der vorausgehenden Ansprüche,
**dadurch gekennzeichnet, dass**
der Führungskanal (34) zum Kühlen von im Bereich eines Einströmabschnitts (24) der Turbinenwelle (12) angeordneten Turbinenelementen,
insbesondere des Einströmabschnitts (24), des Schubausgleichskolbens (30) und/oder der Turbinenwelle (12) im Bereich zwischen dem Einströmabschnitt (24) und dem Schubausgleichskolben (30), angeordnet ist.

9. Turbine nach einem der vorausgehenden Ansprüche,
**dadurch gekennzeichnet, dass**
der Führungskanal (34) im Bereich des Schubausgleichskolbens (30) an einem das Innengehäuse (16) umgebenden Außengehäuse (18) entlanggeführt ist,
insbesondere in einem bezüglich der Turbinenwelle (12) in radialer Richtung zwischen Innengehäuse (16) und Außengehäuse (18) erstreckenden Zwischenraum (40) verläuft.

10. Turbine nach einem der vorausgehenden Ansprüche,
**dadurch gekennzeichnet, dass**
das Innengehäuse (16) zwei durch mindestens ein Verbindungselement miteinander verbundene Gehäuseteile aufweist,
wobei der Führungskanal (34) an dem mindestens einen Verbindungselement zum Kühlen des Verbindungselements entlanggeführt ist.

11. Turbinenwelle (12) für eine Turbine (10) eines thermischen Kraftwerks,
insbesondere nach einem der vorausgehenden Ansprüche,
mit einem Schubausgleichskolben (30) zum zumindest teilweisen Ausgleichen eines auf die Turbinenwelle (12) ausgeübten Schaufelschubs,
**dadurch gekennzeichnet, dass**
die Turbinenwelle (12) als Hochdruckdampfturbinenwelle ausgeführt ist und die Turbinenwelle (12) eine im Bereich des Schubausgleichskolbens (30) angeordnete, mittels Drehung der Turbinenwelle (12) antreibbare Ventilatorstruktur (32) zum Antreiben eines die Turbinenwelle (12) zumindest abschnittsweise kühlenden Kühlmediums (42) aufweist.

12. Turbinenwelle nach Anspruch 11,
**dadurch gekennzeichnet, dass**
die Ventilatorstruktur (32) am Schubausgleichskolben (30) angeordnet ist,
insbesondere integral im Schubausgleichskolben (30) ausgebildet ist.

## Geänderte Patentansprüche

### Geänderte Patentansprüche gemäss Regel 86(2) EPÜ.

**1.** Turbine (10) für ein thermisches Kraftwerk mit einer Turbinenwelle (12) sowie einem die Turbinenwelle (12) umgebenden Innengehäuse (16),
wobei die Turbinenwelle (12) einen Schubausgleichskolben (30) zum zumindest teilweisen Ausgleichen eines auf die Turbinenwelle '(12) ausgeübten Schaufelschubs aufweist, umfassend einen Führungskanal (34) zum Führen eines Kühlmediums (42),
der zumindest abschnittsweise in einem einen axial an den Schubausgleichskolben (30) anschließenden Abschnitt der Turbinenwelle (12) umgebenden Bereich innerhalb des Innengehäuses (16) in Längsrichtung der Turbinenwelle (12) verläuft,
wobei die Turbinenwelle (12) im Bereich des Schubausgleichskolbens (30) eine mittels Drehung der Turbinenwelle (12) antreibbare Ventilatorstruktur (32) zum Antreiben des Kühlmediums (42) bei sich drehender Turbinenwelle (12) aufweist,
**dadurch gekennzeichnet, dass**
die Turbinenwelle (12) einen Einströmabschnitt (24), bei dem ein Turbinenantriebsfluid in einen die Turbinenwelle (12) umgebenden Strömungskanal (22) einströmt,
sowie einen Abströmabschnitt (28), bei dem das Turbinenantriebsfluid in abgekühltem Zustand den Strömungskanal (22) wieder verlässt, aufweist,
wobei der Führungskanal (34) zumindest abschnittsweise im Bereich des Abströmabschnitts (28) verläuft.

**2.** Turbine nach Anspruch 1,
**dadurch gekennzeichnet, dass**
die Turbinenwelle (12) als Hochdruckdampfturbinenwelle ausgeführt ist.

**3.** Turbine nach Anspruch 1 oder 2,
**dadurch gekennzeichnet, dass**
die Ventilatorstruktur (32) am Schubausgleichskolben (30) angeordnet ist,
insbesondere integral im Schubausgleichskolben (30) ausgebildet ist.

**4.** Turbine nach einem der vorausgehenden Ansprüche,
**dadurch gekennzeichnet, dass**
die Ventilatorstruktur (32) mindestens eine in dem Schubausgleichskolben (30) ausgebildete Ausnehmung aufweist, die insbesondere bei sich drehender Turbinenwelle (12) das Kühlmedium (42) in hinsichtlich der Turbinenwelle (12) radialer Richtung antreibt.

**5.** Turbine nach einem der vorausgehenden Ansprüche,
**dadurch gekennzeichnet, dass**
die Turbinenwelle (12) einen Schaufelabschnitt (26) zum Befestigen mindestens einer Turbinenschaufel aufweist und
der Führungskanal (34) zumindest abschnittsweise im Bereich des Schaufelabschnitts (26),
insbesondere über die gesamte Längserstreckung des Schaufelabschnittes (26) entlang der Turbinenwelle (12) innerhalb des Innengehäuses (16) verläuft.

**6.** Turbine nach einem der vorausgehenden Ansprüche,
**dadurch gekennzeichnet, dass**
der Führungskanal (34) schleifenförmig zum Führen des Kühlmediums (42) in einem die Ventilatorstruktur (32) einbindenden Kreislauf ausgebildet ist.

**7.** Turbine nach einem der vorausgehenden Ansprüche,
**dadurch gekennzeichnet, dass**
der Führungskanal (34) zum Kühlen von im Bereich eines Einströmabschnitts (24) der Turbinenwelle (12) angeordneten Turbinenelementen,
insbesondere des Einströmabschnitts (24), des Schubausgleichskolbens (30) und/oder der Turbinenwelle (12) im Bereich zwischen dem Einströmabschnitt (24) und dem Schubausgleichskolben (30), angeordnet ist.

**8.** Turbine nach einem der vorausgehenden Ansprüche,
**dadurch gekennzeichnet, dass**
der Führungskanal (34) im Bereich des Schubausgleichskolbens (30) an einem das Innengehäuse (16) umgebenden Außengehäuse (18) entlanggeführt ist,
insbesondere in einem bezüglich der Turbinenwelle (12) in radialer Richtung zwischen Innengehäuse (16) und Außengehäuse (18) erstreckenden Zwischenraum (40) verläuft.

**9.** Turbine nach einem der vorausgehenden Ansprüche,
**dadurch gekennzeichnet, dass**
das Innengehäuse (16) zwei durch mindestens ein Verbindungselement miteinander verbundene Gehäuseteile aufweist,
wobei der Führungskanal (34) an dem mindestens einen Verbindungselement zum Kühlen des Verbindungselements entlanggeführt ist.

**10.** Turbinenwelle (12) für eine Turbine (10) eines thermischen Kraftwerks,
insbesondere nach einem der vorausgehenden Ansprüche, mit einem Schubausgleichskolben (30) zum zumindest teilweisen Ausgleichen eines auf die Turbinenwelle (12) ausgeübten Schaufelschubs,
**dadurch gekennzeichnet, dass**
die Turbinenwelle (12) als Hochdruckdampfturbinenwelle ausgeführt ist und die Turbinenwelle (12) eine im Bereich des Schubausgleichskolbens (30) angeordnete, mittels Drehung der Turbinenwelle (12) antreibbare Ventilatorstruktur (32) zum Antreiben eines die Turbinenwelle (12) zumindest abschnittsweise kühlenden Kühlmediums (42) aufweist.

**11.** Turbinenwelle nach Anspruch 10,
**dadurch gekennzeichnet, dass**
die Ventilatorstruktur (32) am Schubausgleichskolben (30) angeordnet ist,
insbesondere integral im Schubausgleichskolben (30) ausgebildet ist.
